# EUROPEAN PATENT APPLICATION

(11) **EP 4 648 213 A1**
(43) Date of publication of application: **12.11.2025**
(21) Application number: 24897948.6
(22) Date of filing: 08.11.2024
(51) Int. Cl.: H01M 50/645, H01M 50/258, H01M 50/242

(54) **BATTERY PACK HAVING STOPPER CAPABLE OF CHECKING ARBITRARY DISASSEMBLY**

(30) Priority: 27.11.2023 KR 20230166252
(71) Applicant: LG Energy Solution, Ltd., Seoul 07335 (KR)
(72) Inventor: KIM, Jae Sang, Daejeon 34122 (KR); HUR, Jae Yong, Daejeon 34122 (KR)
(74) Representative: Plasseraud IP
(86) International application number: PCT/KR2024/017687
(87) International publication number: WO 2025/116352

(57) **Abstract**

Disclosed is a battery pack including a case body having an inner space configured to receive a plurality of battery cells, a lower case coupled to the bottom of the case body, a through-hole in the lower case, and a stopper covering the through-hole, wherein the stopper includes a rupture portion configured to rupture when tension is applied from the outside of the lower case. It is possible to determine whether a user has arbitrarily disassembled the battery pack by checking whether the rupture portion has ruptured.

## Description

### [Technical Field]

This application claims the benefit of priority to Korean Patent Application No. 2023-0166252 filed on November 27, 2023, the disclosure of which is incorporated herein by reference in its entirety.

The present invention relates to a battery pack with a stopper capable of checking for arbitrary disassembly. More particularly, the present invention relates to a battery pack with a stopper capable of checking whether a user has arbitrarily disassembled the battery pack so as to be utilized in a manufacturer's warranty system.

### [Background Art]

Carbon emission regulations are being tightened as an alternative for reducing greenhouse gases, and the proportion of people choosing eco-friendly energy as a source of electricity is gradually increasing. Thereamong, lithium secondary batteries are being used as an energy source for various electronic devices because the lithium secondary batteries can be reused through repeated charging and discharging, unlike primary batteries that are used once and discarded.

For example, the use of lithium secondary batteries is spreading not only in small electronic devices such as smartphones but also as a power source for electric vehicles, and battery packs including lithium secondary batteries are increasingly being applied to electronic devices used by consumers as an energy source.

In general, a battery pack may be manufactured in the form of a plurality of battery cells received in a pack case and assembled to be fixedly mounted to a device or removably attached to a device.

The pack case may include a plurality of parts, such as a main case, an upper case, and a lower case, and a fastening member may be used as a means configured to couple the plurality of parts to assemble the battery pack.

As the aesthetics of a product can be enhanced by preventing the fastening member from being visible from the outside, it is possible to design a coupling portion to which the fastening member is coupled so as to be provided in the pack case parts and to cover the coupling portion using a stopper or the like such that the coupling portion is not visible from the outside.

FIG. 1 is a lower perspective view and partial enlarged view of a conventional battery pack.

FIG. 2 is a sectional view of a part of the battery pack of FIG. 1.

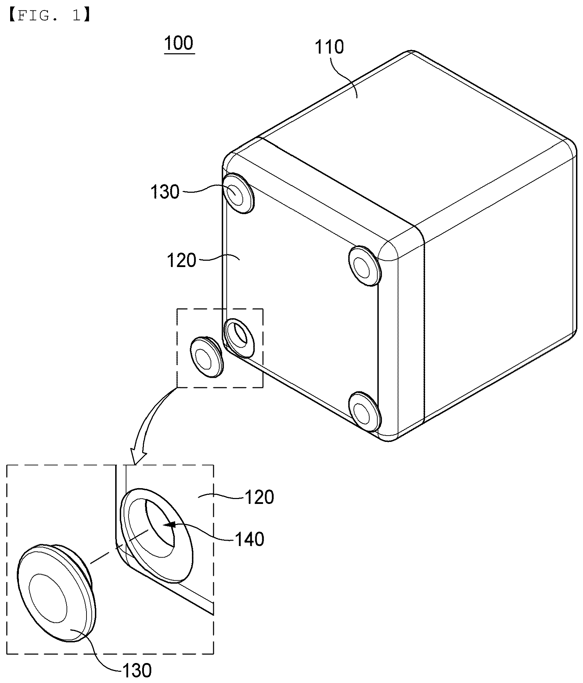

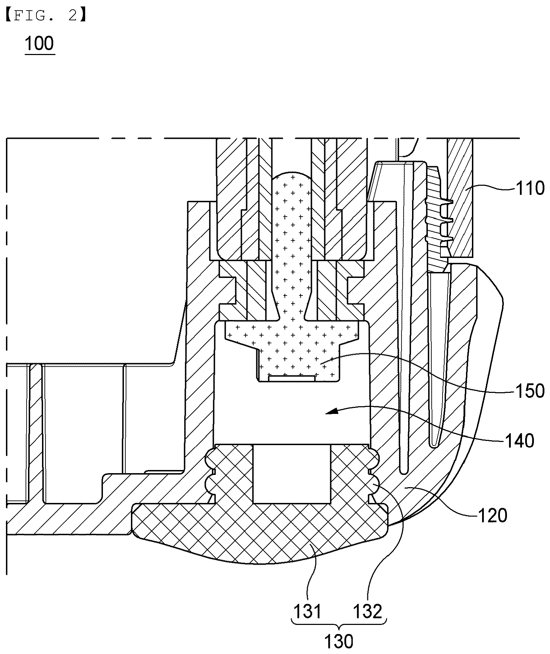

Referring to FIGs. 1 and 2, the battery pack 100 includes a case body 110 and a lower case 120 constituting a lower surface of the case body 110, wherein stoppers 130 are attached to four corners of the bottom of the lower case 120.

The lower case 120 is provided with through-holes 140, into which the stoppers 130 are inserted, and fastening members 150 are inserted into coupling portions provided in the through-holes 140 such that the case body 110 and the lower case 120 are coupled to each other. As such, the stoppers 130 may be added to cover the through-holes 140, whereby the coupling portions that couple the case body 110 and the lower case 120 to each other is not exposed to the outside.

The stopper 130 includes a base portion 131, a part of which is not inserted into the through-hole 140 of the lower case 120, and an insertion portion 132 configured to be fully inserted into the through-hole.

If the base portion 131 is made of a rubber material, the base portion may function to protect the battery pack from floor impact when the battery pack is placed on the floor.

A protrusion structure is formed on the surface of the insertion portion 132, whereby the stopper may be reliably fixed in the through-hole 140.

Meanwhile, if the battery pack fails in the process of using the battery pack or in order to improve the product performance, a user may arbitrarily disassemble the battery pack.

A lithium secondary battery includes an electrolyte solution and an electrode assembly impregnated with the electrolyte solution, wherein the electrode assembly is configured to have a structure in which a positive electrode and a negative electrode are stacked in the state in which a separator is interposed therebetween. If the positive electrode and the negative electrode come into contact with each other due to external impact, short circuit occurs, this may be a factor in the occurrence of a danger such as a fire.

Therefore, it is necessary to prevent safety incidents by preventing the user of the battery pack from arbitrarily disassembling the battery pack.

In addition, if the user arbitrarily disassembles the battery pack to repair the battery pack or replace a part of the battery pack due to failure of the battery pack, it is difficult to guarantee the performance of the product.

Therefore, it is necessary to change the design to determine the validity of the product warranty by easily checking whether the user has arbitrarily disassembled the battery pack when the battery pack is received at a customer center.

### [Disclosure]

### [Technical Problem]

The present invention has been made in view of the above problems, and it is an object of the present invention to provide a battery pack with a stopper capable of checking whether the battery pack has been arbitrarily disassembled so as to be utilized as a basis for judging the product warranty when the battery pack is received at a customer center.

### [Technical Solution]

A battery pack according to the present invention to accomplish the above object includes a case body having an inner space configured to receive a plurality of battery cells, a lower case coupled to the bottom of the case body, a through-hole in the lower case, and a stopper covering the through-hole, wherein the stopper includes a rupture portion configured to rupture when tension is applied from the outside of the lower case.

An inner portion and an outer portion of the through-hole may have different inner diameters, and among the inner portion and the outer portion, the inner diameter of the inner portion may be relatively larger the inner diameter of the outer portion and the inner diameter of the outer portion may be relatively smaller than the inner diameter of the inner portion.

The stopper may include a base portion configured to be exposed outwardly of the lower case when coupled to the through-hole of the lower case, an insertion portion extending from the base portion so as to be inserted into the through-hole, and a catching portion coupled to the end of the insertion portion opposite the base portion.

The insertion portion may include a lower end portion shaped as a circular ring and an upper end portion extending upward from the lower end portion, the upper end portion being connected to the catching portion, the upper end portion including a plurality of columnar structures spaced apart from each other.

The upper end portion may have a thickness gradually decreasing toward the connection with the catching portion, or a relatively small thickness portion may be provided in the upper end portion.

The catching portion may be shaped as a circular tube, and the thickness of the catching portion may be greater than the thickness of the upper end portion of the insertion portion.

The insertion portion and the catching portion may be inserted into the through-hole, the catching portion may be caught by a step in the through-hole, and the position of the catching portion may be fixed.

The rupture portion may be at the connection between the catching portion and the upper end portion of the insertion portion or may be at the upper end portion.

The lower case and the case body may be coupled to each other via a fastening member inserted into the through-hole.

If the stopper that covers the through-hole is pulled to remove the fastening member, the rupture portion of the stopper may rupture.

A plurality of ring-shaped protrusions may be on an outer surface of the lower end portion.

In addition, the present invention may provide various combinations of the above solving means.

### [Advantageous Effects]

As is apparent from the above description, in a battery pack according to the present invention, it is possible to easily check whether a user has arbitrarily disassembled the battery pack.

Therefore, it is possible to easily and accurately determine whether the product warranty is valid or not merely by checking a stopper of the battery pack received at a customer center.

In addition, the stopper is added to a lower case of the battery pack, whereby it is possible to protect the battery pack from impact applied to the battery pack, such as vibration.

### [Description of Drawings]

FIG. 1 is a lower perspective view and partial enlarged view of a conventional battery pack.
FIG. 2 is a sectional view of a part of the battery pack of FIG. 1.

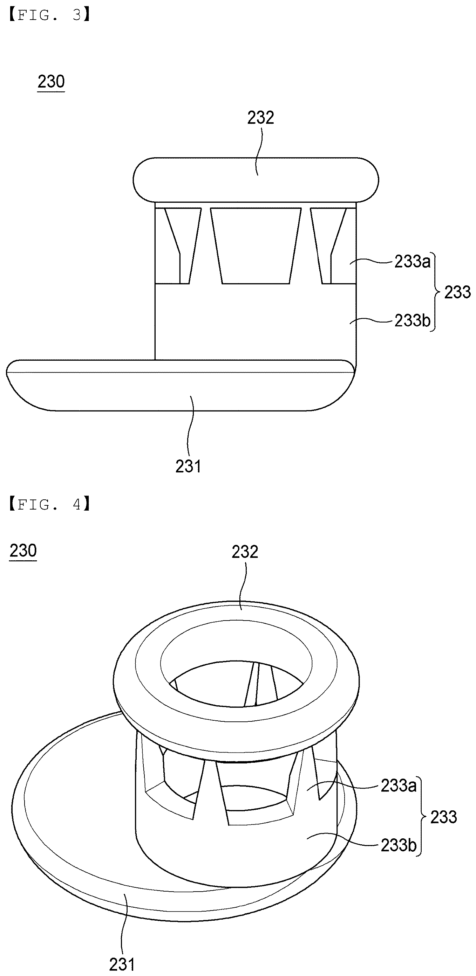

FIG. 3 is a front view of a stopper added to a battery pack according to the present invention.
FIG. 4 is a perspective view of FIG. 3.

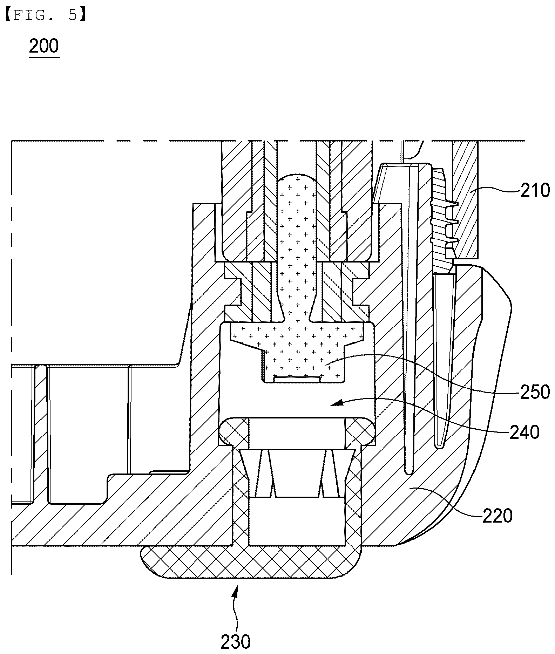

FIG. 5 is a sectional view of a part of the battery pack according to the present invention.

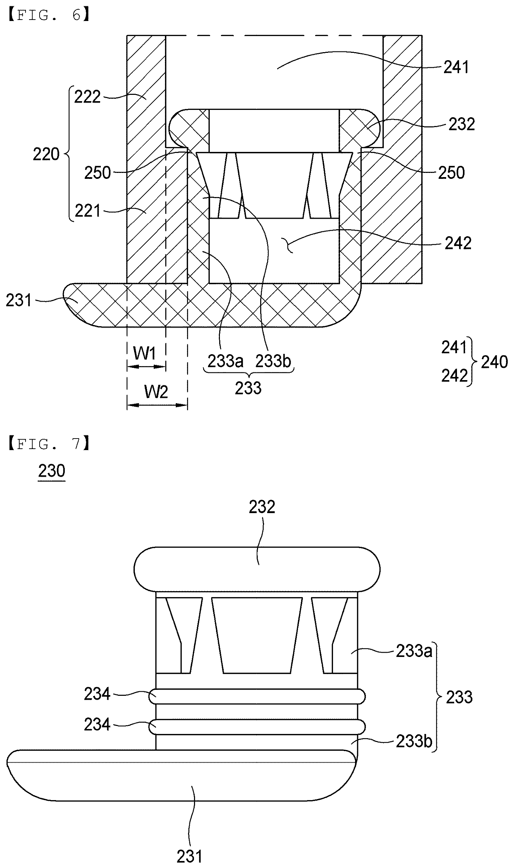

FIG. 6 is a partial enlarged view of FIG. 5.
FIG. 7 is a front view of a stopper according to another embodiment.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Embodiments of the present invention will be described in more detail with reference to the drawings.

FIG. 3 is a front view of a stopper added to a battery pack according to the present invention, FIG. 4 is a perspective view of FIG. 3, FIG. 5 is a sectional view of a part of the battery pack according to the present invention, and FIG. 6 is a partial enlarged view of FIG. 5.

The appearance of the battery pack according to the present invention may be identical to the appearance of the conventional battery pack 100 shown in FIG. 1.

Referring to FIGs. 3 to 6, wherein FIG. 5 shows a part of the battery pack, the battery pack 200 according to the present invention includes a case body 210 having an inner space configured to receive a plurality of battery cells, a lower case 220 coupled to the bottom of the case body 210, a through-hole 240 formed in the lower case 220, and a stopper 230 added so as to cover the through-hole 240.

The through-hole 240 formed in the lower case 220 may extend to the case body 210 so as to communicate therewith, and the case body 210 and the lower case 220 are coupled to each other via a fastening member 250 inserted into the through-hole 240. The fastening member 250 may be a screw or a rivet.

The stopper 230 includes a structurally fragile part, e.g., a rupture portion 260 configured to rupture when tension is applied from the outside of the lower case 220.

The through-hole 240 is formed in a cylindrical shape, wherein the inner diameters of an inner portion 241 and an outer portion 242 are different from each other, and the inner diameter of the inner portion 241 is greater than the inner diameter of the outer portion 242. That is, a step is formed between the inner portion 241 and the outer portion 242.

The stopper 230 includes a base portion 231 whose bottom surface protrudes outwardly of the lower case 220 when coupled to the through-hole 240 of the lower case 210, an insertion portion 232 extending from the base portion 231 so as to be inserted into the through-hole 240, and a catching portion 233 coupled to the end of the insertion portion 232 opposite the base portion 231.

The insertion portion 232 includes a lower end portion 232b configured in the form of a circular ring and an upper end portion 232a extending upward from the lower end portion 232b, the upper end portion 232a being connected to the catching portion 233, the upper end portion 232a being configured to have a structure in which a plurality of columnar structures is disposed so as to be spaced apart from each other.

The catching portion 233 is configured in the form of a circular tube, and the thickness of the catching portion 233 is greater than the thickness of the upper end portion 232a of the insertion portion 232.

The insertion portion 232 and the catching portion 233 are inserted into the through-hole 240, and the catching portion 233 is caught by the step formed between the inner portion 241 and the outer portion 242 of the through-hole 240, whereby the position of the catching portion is fixed. That is, since the outer diameter of the catching portion 233, which is configured in the form of a circular tube, is greater than the inner diameter of the outer portion 242, when the catching portion 233 is inserted into the inner portion 241 and caught by the step, it is difficult to pull the entirety of the stopper 230 out of the through-hole 240 even if the base portion 231 is pulled out. In addition, the area of the base portion 231 is greater than the diameter of the through-hole 240 in order to prevent the entirety of the stopper 230 from being completely inserted into the through-hole 240.

When the length of the insertion portion 232 and the length of the outer portion 242 of the through-hole are equal to each other, the stopper 230 may be stably fixed in the through-hole 240 without moving inwardly or outwardly of the battery pack.

Meanwhile, if the stopper 230 is made of an elastic material such as rubber, even if the outer diameter of the insertion portion 232 is slightly greater than the inner diameter of the outer portion 242, the insertion portion 232 may be compressed and inserted into the through-hole 240, and after being inserted into the through-hole 240, the insertion portion 232 may expand again to fill the space in the outer portion 242.

In particular, the outer diameter of the catching portion 233 is greater than the inner diameter of each of the inner portion 241 and the outer portion 242 of the through-hole 240, and the entirety of the stopper 230 is made of an elastic material such that the catching portion 233 can be easily inserted into the inner portion of the through-hole 240.

In addition, if the base portion 231 that protrudes outwardly of the lower case 220 is made of an elastic material, it is possible to reduce transmission of external impact, such as vibration of the ground, to the battery pack 200 when the battery pack 200 is placed on the floor.

In a specific example, if the stopper 230 that covers the through-hole 240 is pulled in order to remove the fastening member 250 that couples the case body 210 and the lower case 220 to each other, the rupture portion 260 of the stopper 230, which is a structurally weak part, ruptures.

The rupture portion 260 may be formed at the connection between the catching portion 233 and the upper end portion 232a of the insertion portion 232, or may be formed at the upper end portion 232a.

In the stopper 230 shown in FIGs. 3 to 6, the rupture portion 260 is formed at the connection between the catching portion 233 and the upper end portion 232a of the insertion portion 232. Specifically, the upper end portion 232a has a thickness that decreases toward the connection with the catching portion 233.

Alternatively, unlike what is shown, the middle of the upper end portion 232a may be narrow, or a lower part of the upper end portion 232a where the upper end portion 232a and the lower end portion 232b are connected to each other may be thin.

Such a small thickness portion is easily broken when the base portion is pulled out from the outside of the lower case, whereby the catching portion 233 remains in the through-hole 240 and only the insertion portion 232 is discharged out of the through-hole 240.

Therefore, a battery pack manufacturer may easily check whether a user has arbitrarily removed a stopper of a battery pack merely by removing the stopper from the battery pack at a customer center.

Specifically, it is possible to determine whether the user has arbitrarily removed the stopper from the battery pack using a method of, when removing the stopper from the battery pack, attaching a tool, such as a push-pull gauge, to the stopper and measuring the amount of torque or force while pulling the stopper.

The breaking limit of the stopper may be set based on design of experiment (DOE), and if force less than the breaking limit is required to remove the stopper, the user may be considered to have arbitrarily removed the stopper.

FIG. 7 is a front view of a stopper according to another embodiment.

Referring to FIG. 7, the stopper 230 is different from the stopper 230 shown in FIGs. 3 to 6 in that a plurality of ring-shaped protrusions 234 is formed on an outer surface of the lower end portion 232b.

The protrusions 234 may function as a gasket in a state of being disposed in the outer portion 242 of the through-hole 240, thereby preventing foreign material from entering the battery pack.

In the other configuration, a description of the stopper shown in FIGs. 3 to 6 may be equally applied to the stopper 230 shown in FIG. 7.

Those skilled in the art to which the present invention pertains will appreciate that various applications and modifications are possible within the scope of the present invention based on the above description.

### (Description of Reference Numerals)

100, 200: Battery packs
110, 210: Case bodies
120, 220: Lower cases
130, 230: Stoppers
131, 231: Base portions
132, 232: Insertion portions
140, 240: Through-holes
150, 250: Fastening members
232a: Upper end portion
232b: Lower end portion
233: Catching portion
234: Protrusion
241: Inner Portion
242: Outer portion
260: Rupture portion

## Claims

1. A battery pack comprising:
a case body having an inner space configured to receive a plurality of battery cells;
a lower case coupled to a bottom of the case body;
a through-hole in the lower case; and
a stopper covering the through-hole, wherein
the stopper comprises a rupture portion configured to rupture when tension is applied from an outside of the lower case.

2. The battery pack according to claim 1, wherein
an inner portion and an outer portion of the through-hole have different inner diameters, and
wherein, among the inner portion and the outer portion, the inner diameter of the inner portion is relatively larger than the inner diameter of the outer portion and the inner diameter of the outer portion is relatively smaller than the inner diameter of the inner portion.

3. The battery pack according to claim 1, wherein the stopper comprises:
a base portion configured to be exposed outwardly of the lower case when coupled to the through-hole of the lower case;
an insertion portion extending from the base portion so as to be inserted into the through-hole; and
a catching portion coupled to an end of the insertion portion opposite the base portion.

4. The battery pack according to claim 3, wherein the insertion portion comprises:
a lower end portion shaped as a circular ring; and
an upper end portion extending upward from the lower end portion, the upper end portion being connected to the catching portion, the upper end portion including a plurality of columnar structures spaced apart from each other.

5. The battery pack according to claim 4, wherein
the upper end portion has a thickness gradually decreasing toward a connection with the catching portion, or
a relatively small thickness portion is provided in the upper end portion.

6. The battery pack according to claim 4, wherein
the catching portion is shaped as a circular tube, and
wherein a thickness of the catching portion is greater than a thickness of the upper end portion of the insertion portion.

7. The battery pack according to claim 3, wherein
the insertion portion and the catching portion are inserted into the through-hole,
wherein the catching portion is caught by a step in the through-hole, and
wherein a position of the catching portion is fixed.

8. The battery pack according to claim 4, wherein the rupture portion is at a connection between the catching portion and the upper end portion of the insertion portion or is at the upper end portion.

9. The battery pack according to claim 1, wherein the lower case and the case body are coupled to each other via a fastening member inserted into the through-hole.

10. The battery pack according to claim 9, wherein, if the stopper that covers the through-hole is pulled to remove the fastening member, the rupture portion of the stopper ruptures.

11. The battery pack according to claim 4, wherein a plurality of ring-shaped protrusions is on an outer surface of the lower end portion.
